# NEUE EUROPÄISCHE PATENTSCHRIFT

(11) **EP 0 926 373 B2**
(45) Veröffentlichungstag und Bekanntmachung des Hinweises auf die Entscheidung über den Einspruch: **02.11.2005**
(45) Hinweis auf die Patenterteilung: 31.10.2001
(21) Anmeldenummer: 97121487.9
(22) Anmeldetag: 06.12.1997
(51) Int. Cl.: F16D 3/223

(54) **Verfahren zur Fertigbearbeitung der Kugelschale eines Gleichlaufgelenkes**
Method for finishing the outer member of a universal joint
Procédé de finition de l'élément extérieur d'un joint universel

(43) Veröffentlichungstag der Anmeldung: 30.06.1999
(73) Patentinhaber: Iprotec Maschinen- und Edelstahlprodukte GmbH, 32469 Petershagen-Friedewalde (DE)
(72) Erfinder:
(74) Vertreter: Bauer, Wulf

(56) Entgegenhaltungen:
- WO-A-96/38680
- DE-A- 4 034 516
- DE-A- 4 034 517
- US-A- 4 116 020
- US-A- 4 575 362
- Prospekt "Form-Dreh-Zentrum FDZ 100" der Heckler & Koch Maschinen- und Anlagenbau GmbH
- Fertigungsverfahren Band 1, Drehen, Fräsen, Bohren, W. König, VDI-Verlag, 1990
- Eidesstattliche Versicherung von Herrn H-H Welschof im Lochseif 68a, D-63517 Rodenbach
- Unrunddrehen mit dem CNC-Formdrehzentrum FDZ-100, Dieter Hofmann; VDI-Z 133 (1991); nr. 6
- Zeitschrift für Maschinenbau, Konstruktion und Fertigung 5/94 Hartdrehen statt Schleifen; Preis, Aschner, Kunz; Werkstatt und Betrieb 127(1994)5

## Beschreibung

Die Erfindung betrifft ein Verfahren zur Fertigbearbeitung einstückig ausgeführten Kugelschalen und Radantriebswellen eines Gleichlaufgelenkes, insbesondere für Kraftfahrzeuge, mit einer kugelringförmigen Lagerfläche für den Kugelkäfig und mit einer Mehrzahl von diese kugelringförmige Lagerfläche unterbrechenden, im wesentlichen axial verlaufenden Führungsbahnen für die in Kugeltaschen des Kugelkäfigs angeordneten, Drehmomente zwischen der Kugelschale und dem Kugelstern übertragenden Kugeln.

Die gleichzeitige europäische Anmeldungen des Anmelders IPROTEC, EP-A-0 921 329 und EP-A-0 952 364, betreffen ähnliche Verfahren zur Fertigbearbeitung des Kugelsterns bzw. des Kugelhäfigs.

Bei Kraftfahrzeugen mit Vorderradantrieb werden die gelenkten Räder angetrieben. Deshalb müssen Vorderradachswellen Gelenke haben, die sowohl das Ein- und Ausfedern der Räder als auch deren Lenkeinschlag zulassen. Um einen möglichst gleichförmigen Antrieb der Räder zu ermöglichen, werden hierzu Gleichlaufgelenke (homokinetische Gelenke) verwendet. Bei Gelenken an Vorderachswellen werden hierbei unter anderem als Topfgelenke ausgebildete Gleichlauf-Festgelenke verwendet, während bei Gelenken an Hinterachswellen als Topfgelenke ausgebildete Gleichlauf-Verschiebegelenke verwendet werden, die neben einer Beugung des Gelenks eine axiale Verschiebung ermöglichen.

Diese Topfgelenke bestehen aus einem auf das radseitige Achswellenende aufgesetzten Kugelstern, auf dem der Kugelkäfig mit Kugeln sowie die mit der Radantriebswelle verbundene Kugelschale sitzen. Bei dem Gleichlauf-Festgelenk weisen Kugelschale und Kugetstern gekrümmte Bahnen auf, auf denen sich die Kugeln bewegen. Bei dem Gleichlauf-Verschiebegelenk sind die

Bewegungsbahnen an Kugelschale und Kugelstern eben ausgebildet.

Bei den aus der Praxis bekannten, aus Kugelstern, Kugelkäfig und Kugelschale bestehenden Gleichlaufgelenken erfolgt die Fertigbearbeitung der mit einer kugelringförmigen Lagerflächefür den Kugelkäfig sowie mit Führungsbahnen für die Kugeln versehenen Kugelschale in einer Vielzahl unterschiedlicher Arbeitsschritte, die zum Teil auf verschiedenen Maschinen durchgeführt werden. Ausgehend von einem gesenkgeschmiedeten Kugelschalen-Rohling werden bei den bekannten Fertigbearbeitungsverfahren die Führungsbahnen durch Räumen und/oder Fräsen sowie abschließendes Schleifen hergestellt, während die Lagerfläche durch Drehen hergestellt wird. Insbesondere bei der Fertigbearbeitung von Kugelschalen von Gleichlauf-Festgelenken ist die Bearbeitung sehr aufwendig, da sowohl die Lagerfläche als auch die Führungsbahnen in Achsrichtung der Lagerschale gekrümmt ausgebildet sind.

Nachteilig bei diesem bekannten Herstellungsverfahren ist, daß durch die Verwendung unterschiedlicher spannabhebender Bearbeitungsverfahren, zu denen die zu bearbeitende Kugelschale mehrfach umgespannt und eventuell unterschiedlichen Maschinen zugeführt werden muß, die Fertigbearbeitung der Kugelschale sehr zeitaufwendig und somit teuer ist. Darüber hinaus treten aufgrund derverschiedenen Umspannungen Fehler auf, so daß Toleranzen nur in bestimmten Grenzen möglich sind.

Die US 4 861 316 beschreibt die Fertigung von Bauteilen eines Gleichlaüfgelenkes, insbesondere einer Kugelschale Demnach ist es notwendig, aufgrund hoher Anforderungen die Bauteile mit einem Schleifverfahren fertig zu bearbeiten.

Auch die US 4 575 362 zeigt, dass Bauteile eines Gleichlaufgelenkes durch Drehen hergestellt, anschließend gehärtet und Schleißlich geschliffen werden

Die "Zeitschrift für Maschinenbau Konstruktion und Fertigung 5/94" beschreibt Schwierigkeiten, die beim Hartdrehen statt Schleifen gegeben sind Das Hartdrehen mit unterbrochenen Schnitt ist bei Auswahl einer geeigneten Werkstoffes möglich.

Der Artikel "Umrunddrehen mit dem CNC-Formdrehzentrum FOZ 100" aus des Zeitschrift "VDI-Zeitung 133 (1991), Nr. 6 sowie ein Prospekt über dieses Formdrehzentrum des Heckler und Koch Maschinen- und Anlagebau GmbH beschreiben, dass es moglich ist, Bauteile mit einem Umrunddrehverfahren herzustellen. Gezeigt ist ein Bild einer Kugelschale.

Der Erfindung liegt die **Aufgabe** zugrunde, ein Verfahren zur Fertigbearbeitung einstückig ausgeführten Kugelschalen und Radantriebswellen eines Gleichlaufgelenkes bereitzustellen, welches eine einfache, kostengünstige und vollautomatisierbare Fertigbearbeitung von Kugelschalen ermöglicht, die darüber hinaus mit einer erhöhten Genauigkeit erfolgt.

Die **Lösung** dieser Aufgabenstellung erfolgt erfindungsgemäß durch ein Verfahren mit den Verfahrensschritten des Anspruchs 1.

Durch dieses erfindungsgemäße Herstellungsverfahren ist es erstmalig möglich, die Kugelschale eines Gleichlaufgelenks durch ein einheitliches spannabhebendes Bearbeitungsverfahren, nämlich ein Hartdrehbearbeitungsverfahren herzustellen, wobei die Bearbeitung in einer Aufspannung erfolgt. Infolge der Bearbeitung nur durch Hartdrehbearbeitung auf einer Maschine ergibt sich gegenüber den aus der Praxis bekannten Fertigbearbeitungsverfahren ein eindeutiger Zeit-, Kosten- und Genauigkeitsvorteil für das erfindungsgemäße Verfahren.

Gemäß einer praktischen Ausführungsform der Erfindung wird vorgeschlagen, daß der axiale Verlauf der Führungsbahnen rein sphärisch ausgebildet ist.

Weiterhin wird mit der Erfindung vorgeschlagen, daß der axiale Verlauf der Führungsbahnen aus einem zylindrischen und einem sphärischen Teil zusammengesetzt ist. Beide Kugelschalensorten werden für Gleichlauf-Festgelenke verwendet.

Weiterhin wird mit der Erfindung vorgeschlagen, daß die Führungsbahnen entweder achsparallel oder unter einem spitzen Winkel zur Drehachse der Kugelschale verlaufen können.

Gemäß einer praktischen Ausführungsform der Erfindung verlaufen die Berührungslinien der Kugeln mit den zugehörigen Führungsbahnen räumlich parallel zueinander. Insbesondere bei der Ausbildung der sphärischen Führungsbahnen wird weiterhin vorgeschlagen, daß der Abstand der Berührungslinien der Kugeln mit den zugehörigen Führungsbahnen sich in axialer Richtung verändert, wodurch eine Optimierung der Drehmomentübertragung erzielt wird.

Schließlich wird mit der Erfindung vorgeschlagen, daß Kugelschale und Radantriebswelle als einstückiges Bauteil ausgebildet sind und das Drehverfahren ein Hartdrehverfahren ist, so daß auch gehärtete Werkstücke bearbeitet werden können.

Das dargestellte Gleichlauf-Festgelenk 1 besteht aus einem über eine Verzahnung 2a auf ein radseitiges Achswellenende aufgesetzten Kugelstern 2, auf dem ein Kugelkäfig 3 mit Kugeln 4 sowie eine mit einer Radantriebswelle 5 verbundene Kugelschale 6 sitzen.

Bei dem als Gleichlauf-Festgelenk 1 ausgebildeten Gleichlaufgelenk weisen Kugelschale 6 und Kugeistern 2 sphärisch gekrümmte Führungsbahnen 7 auf, auf denen sich die Kugeln 4 bewegen. Zur Lagerung des Kugelkäfigs 3 weist die Kugelschale 6 eine kugelringförmige Lagerfläche 8 auf.

Beim dargestellten Ausführungsbeispiel verlaufen die Berührungslinien 9 der Kugeln 4 mit der zugehörigen Führungsbahn 7 räumlich parallel zueinander.

Bei dem dargestellten nicht erfindungsgemäßen Gleichlauf-Festgelenk 1 das zum besseren Verständnis dient, sind Kugelschale 6 und Radantriebswelle 5 als separate Bauteile ausgebildet. Zur Verbindung der Kugelschale 6 mit der Radantriebswelle 5 ist im Boden der Lagerschale 6 eine polygonale Öffnung 10 ausgebildet, in die die Radantriebswelle 5 mit einem entsprechend geformten polygonalen Ansatz einsetzbar ist. Um eine Selbstzentrierung dieser polygonalen Anlageflächen zu erzielen, sind die polygonale Öffnung 10 sowie der polygonale Ansatz der Radantriebswelle 5 in Achsrichtung konisch ausgebildet.

Der von der Kugelschale 6 fortweisende Teil der Radantriebswelle 5 besteht aus einem zylindrischen Teil 5a zur Aufnahme des Radlagers sowie einem Verbindungsteil 5b zum Verbinden mit dem anzutreibenden Rad.

Dieser Verbindungsteil 5b weist eine polygonale Außenkontur auf. Im Gegensatz zu dem dargestellten Gleichlauf-Festgelenk sind die Kugelschale 6 und die Radantriebswelle 5 erfindungsgemäß als einstückiges Bauteil ausgeführt.

### Bezugszeichenliste

- 1: Gleichlauf-Festgelenk
- 2: Kugelstern
- 2a: Verzahnung
- 3: Kugelkäfig
- 4: Kugel
- 5: Radantriebswelle
- 5a: zylindrischer Teil
- 5b: Verbindungsteil
- 6: Kugelschale
- 7: Führungsbahn
- 8: Lagerfläche
- 9: Berührungslinie
- 10: polygonale Öffnung

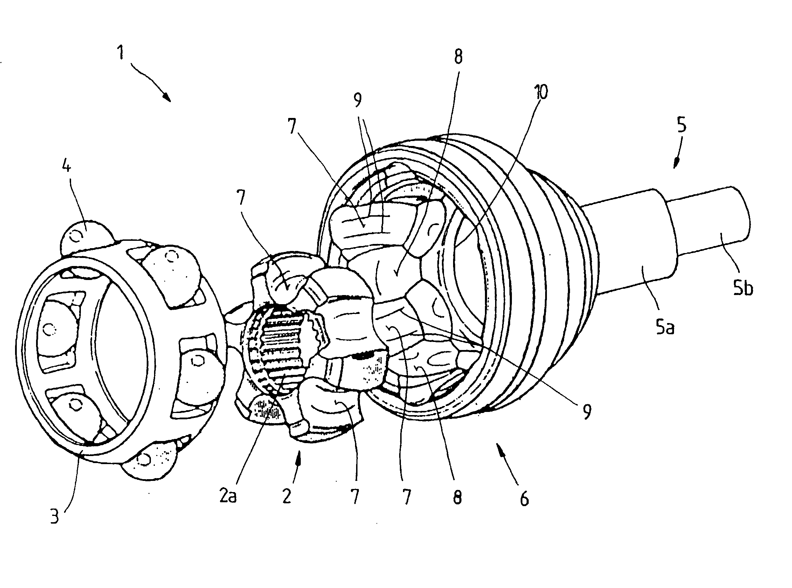

## Patentansprüche

1. Verfahren zur Fertigbearbeitung von gehärteten einstückig ausgeführten Kugelschalen (6) und Radantriebswellen die für Gleichlaufgelenke, insbesondere für Kraftfahrzeuge, bestimmt sind, mit einer kugelringförmigen Lagerfläche (8) für den Kugelkäfig (3) und einer Mehrzahl von diese kugelringförmige Lagerfläche (8) unterbrechenden, im Wesentlichen axial verlaufenden Führungsbahnen (7) für die in Kugeltaschen des Kugelkäfigs (3) angeordneten, Drehmomente zwischen Kugelschale (6) und Kugelstern (2) übertragenen Kugeln (4) und einer, wobei die Radantriebswelle ein Verbindungsteil (5b) mit einer polygonalen Aussenkontur aufweist wobei die kugelringförmige Lagerfläche (8) für den Kugelkäfig (3) als auch die Führungsbahnen (7) für die Kugeln (4) durch Hartdrehen bearbeitet werden.

2. Verfahren nach Anspruch 1, **dadurch gekennzeichnet, daß** der axiale Verlauf der Führungsbahnen (7) rein sphärisch ausgebildet ist.

3. Verfahren nach Anspruch 1, **dadurch gekennzelchnet, daß** der axiale Verlauf der Führungsbahnen (7) aus einem sphärischen und einem zylindrischen Teil zusammengesetzt ist.

4. Verfahren nach mindestens einem der Ansprüche 1 bis 3, **dadurch gekennzeichnet, daß** die Führungsbahnen (7) achsparallel verlaufen.

5. Verfahren nach mindestens einem der Ansprüche 1 bis 3, **dadurch gekennzeichnet, daß** die Führungsbahnen (7) unter einem spitzen Winkel zur Drehachse der Kugelschale (6) verlaufen.

6. Verfahren nach mindestens einem der Ansprüche 1 bis 5, **dadurch gekennzeichnet, daß** die Berührungslinien (9) der Kugeln (4) mit den zugehörigen Führungsbahnen (7) räumlich parallel zueinander verlaufen.

7. Verfahren nach mindestens einem der Ansprüche 1 bis 5, **dadurch gekennzeichnet, daß** der Abstand der Berührungslinien (9) der Kugeln (4) mit den zugehörigen Führungsbahnen (7) sich in axialer Richtung verändert.

## Claims

1. A method of finish machining hardened single piece ball sockets (6) and wheel drive shafts (5) for constant-velocity joints, in particular for motor vehicles, having a ball-raced-shaped bearing surface (8) for the ball cage (3) and a multiplicity of essentially axially running guideways (7) interrupting this ball-race-shaped bearing surface (8) and intended for the balls (4) arranged in the ball pockets of the ball cage (3) and transmitting torque between ball socket (6) and ball star (2), said wheel drive shaft comprising a connecting part (5b) having a polygonal outer contour, both said ball-race-shaped bearing surface (8) for the ball cage(3) and the guideways (7) for the balls (4) are machined by hard turning.

2. Method according to Claim 1, **characterized in that** the axial course of the guideways (7) is of purely spherical design.

3. Method according to Claim 1, **characterized in that** the axial course of the guideways (7) is composed of a spherical and a cylindrical part.

4. Method according to at least one of Claims 1 to 3, **characterized in that** the guideways (7) run in an axially parallel manner.

5. Method according to at least one of Claims 1 to 3, **characterized in that** the guideways (7) run at an acute angle to the axis of rotation of the ball socket (6).

6. Method according to at least one of Claims 1 to 5, **characterized in that** the lines (9) of contact between the balls (4) and the associated guideways (7) run spatially parallel to one another.

7. Method according to at least one of Claims 1 to 5, **characterized in that** the spacing of the lines (9) of contact between the balls *(A)* and the associated guideways (7) changes in the axial direction.

## Revendications

1. Procédé de finition de coussinets à billes et d'axes d'entraînement de roues (6) durcis réalisés d'un seul tenant et destinés à être utilisés dans des joints homocinétiques, notamment dans des véhicules automobiles, avec une surface de coussinet (8) en forme de couronne sphérique pour la cage à billes (3) et avec une multitude de voies de guidage (7) s'étendant sensiblement axialement et interrompant cette surface de coussinet (8) en forme de couronne sphérique, lesdites voies de guidage étant destinées aux billes (4) agencées dans des poches de la cage à billes (3) et transmettant des couples entre le coussinet à billes (6) et le croisillon (2), l'axe d'entraînement de roues comportant une pièce de liaison (5b) au contour extérieur polygonal, la surface de coussinet (8) en forme de couronne sphérique pour la cage à billes (3) comme les voies de guidage (7) des billes (4) étant usinées en tournage dur.

2. Procède selon la revendication 1, **caractérisé en ce que** le trace axial des voies de guidage (7) est réalise en forme purement spherique.

3. Procède selon la revendication 1, **caractérisé en ce que** le trace axial des voies de guidage (7) est compose par une partie spherique et une partie cylindrique.

4. Procède selon au moins l'une quelconque des revendications 1 à 3, **caractérisé en ce que** les voies de guidage (7) s'étendent avec des axes parallèles.

5. Procède selon au moins l'une quelconque des revendications 1 à 3, **caractérise en ce que** les voies de guidage (7) s'étendent en formant un angle aigu par rapport à l'axe de rotation du coussinet à billes (6).

6. Procède selon au moins l'une quelconque des revendications 1 à 5, **caractérisé en ce que** les lignes de contact (9) des billes (4) avec les voies de guidage (7) associées s'étendent dans l'espace parallèlement les unes aux autres.

7. Procède selon au moins l'une quelconque des revendications 1 à 5, **caractérisé en ce que** la distance des lignes de contact (9) des billes (4) avec les voies de guidage (7) associées varie en direction axiale.
